# EUROPÄISCHE PATENTSCHRIFT

(11) **EP 0 924 839 B1**
(45) Veröffentlichungstag und Bekanntmachung des Hinweises auf die Patenterteilung: **10.08.2005**
(21) Anmeldenummer: 98123287.9
(22) Anmeldetag: 07.12.1998
(51) Int. Cl.: H02K 5/20

(54) **Elektromotor mit Mitteln zur Kühlung**
Electric motor with cooling means
Moteur électrique avec des moyens de refroidissement

(30) Priorität: 18.12.1997 DE 29722432 U
(43) Veröffentlichungstag der Anmeldung: 23.06.1999
(73) Patentinhaber: SIEMENS AKTIENGESELLSCHAFT, 80333 München (DE)
(72) Erfinder: Zisler, Michael, Dipl.-Ing. (FH), 97717 Euerdorf-Wirmsthal (DE)

(56) Entgegenhaltungen:
- US-A- 2 627 582
- US-A- 5 084 642

## Beschreibung

Die Erfindung betrifft einen Elektromotor mit Gehäuse.

Die bisher bekannten Konstruktionen der Kühlung eines Elektromotors sind derart ausgeführt, dass man z.B. um das Ständergehäuse spirel- oder schlangenlinienförmig gewundene Rohre führt. Diese Ausführungen verursachen fertigungstechnisch große Schwierigkeiten.

Aus der DE-AS 1 231 797 ist eine innenbelüftete, elektrische Maschine mit Wasserrückkühlung der Innenluft mittels eines zwischen dem aktiven Teil und dem Gehäusemantel angeordneten Wärmeaustauschers bekannt, der aus kühlwasserdurchflossenen Rohren besteht, die konzentrisch um den aktiven Teil der Maschinen, und zwar auf dessen gesamten Umfang angeordnet sind.

Die Kühlrohre verlaufen in axialer Richtung und jeweils benachbarte Kühlrohre sind gruppenweise an den Stirnseiten der Maschine angeordnet und zusammengefasst und durch einen Reinigungsverschlussdeckel flüssigkeitsdicht verschlossen.

Aus der GM 74 18 732 ist eine elektrische Maschine bekannt, auf deren Oberfläche des Motorgehäuses längs verlaufende Lagerbefestigungsrippen vorhanden sind, in deren Längsbohrungen sich Kühlmittel befindet.

Aus der DE-US 20 05 802 ist eine elektrische Maschine bekannt, deren Stator von einem Kühlmantel umgeben ist, in dem axiale Kühlkanäle angeordnet sind.

Aus der US 2 627 582 ist eine elektrische Maschine bekannt, die durch Anbringen von zusätzlichen Elementen in ihren Eckbereichen Kühlkanäle schafft.

Die Aufgabe der Erfindung ist, eine elektrische Maschine zu schaffen, deren Kühlkreisläufe möglichst wenig Dichtungsstellen und geringen Fertigungsaufwand aufweisen; außerdem soll die Maschine von einer luftgekühlten Anordnung auf eine Flüssigkeitskühlung umgestellt werden können.

Die Lösung der gestellten Aufgabe gelingt erfindungsgemäß durch einen Elektromotor gemäß Anspruch 1.

Durch Lagerschilde, die konstruktiv für Umlenkung der Kühlmedien ausgelegt sind, kann sich die Anzahl der Umlenklaschen reduzieren. Zwei Bohrungen, die als Ein- bzw. Auslaß vorgesehen sind, bilden einen Kühlkreislauf. Für die Realisierung mehrerer Kühlkreisläufe bedarf es dementsprechend mehrerer Ein- bzw. Auslässe. Die Kühlkanäle können mit gas- oder flüssigkeitsförmigen Kühlmedien beaufschlagt werden. Bei mehreren Kühlkreisläufen ist auch eine Kombination von Gas- und Flüssigkeitskühlungen vorstellbar.

In einer weiteren Ausgestaltung befinden sich die Bohrungen im wesentlichen senkrecht am Gehäuse. Diese Ausführungsform ist vor allem für rechteckförmige Gehäusequerschnitte vorteilhaft, da in diesem Fall die Bohrtiefe ein Minimum erreicht. Die Umlenklaschen können je nach Umgebungsbedingungen, in denen sich der Motor befindet, aus Kunststoff oder Metall sein. Sie sind an das Gehäuse entweder geklebt, geschraubt oder genietet. Vorteilhaft für eine Abdichtung der Umlenklaschen am Gehäuse ist es, wenn die Gehäusewand glatt ist.

Eine weitere naheliegende Ausgestaltung ergibt sich durch eine Versenkung der Umlenklaschen in die Gehäuseoberfläche, so daß die Außenkontur dabei nicht beeinträchtigt wird. Die Bohrungen im Gehäuse verlaufen demnach mehr tangential als radial.

Die Erfindung wird anhand eines Ausführungsbeispiels näher erläutert:

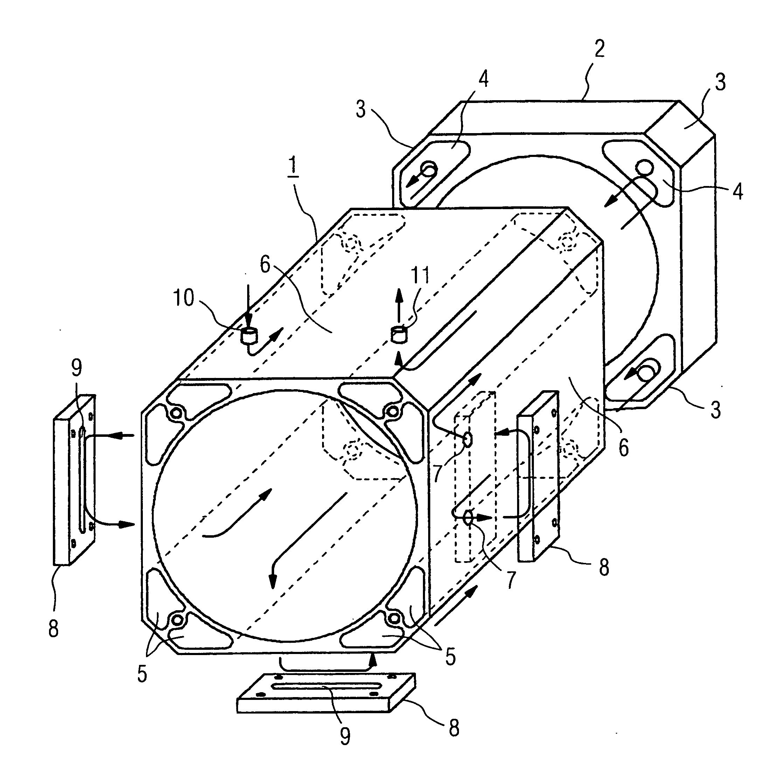

Die Zeichnung zeigt eine rechteckige Außenkontur eines Gehäuses 1 eines Elektromotors mit axial befestigbaren Lagerschilden 2. Das Lagerschild 2 weist in jedem der vier Eckbereiche 3 einen Umlenkkanal 4 für Kühlmedien auf. Das Gehäuse 1 selbst zeigt in jedem Eckbereich zwei parallel ausgebildete Kühlkanäle 5, die nur über einen korrespondierenden Umlenkkanal 4 des Lagerschildes 2 miteinander strömungsmäßig in Verbindung stehen. Jeder Kühlkanal 5 weist auf der Gehäuseoberfläche 6 eine Bohrung 7 senkrecht zur Gehäuseoberfläche 6 auf. Diese Bohrungen 7 verbinden die Kühlkanäle 5 mit der Gehäuseoberfläche 6. An dieser Gehäuseoberfläche 6 sind Umlenklaschen 8 befestigt, die Nuten 9 aufweisen, deren Querschnitt mindestens dem der Bohrung 7 entspricht und die Kühlkanäle 5 benachbarter Eckbereiche strömungsmäßig verbindet. Zwei Bohrungen 7 werden als Ein- 10 bzw. Auslaßöffnungen 11 ausgebildet. Bei mehreren Kühlkreisläufen pro Elektromotor sind dementsprechend mehrere Ein- 10 bzw. Auslaßöffnungen 11 vorzusehen.

Ein großer Vorteil dieses Elektromotors ist, daß auch mit durchzugsbelüfteten Elektromotoren auf relativ einfache Art ein Motor mit Flüssigkeitskühlung hergestellt werden kann. Bei Flüssigkeitskühlung sind die Kühlkanäle 5 an der Übergangsstelle von Gehäuse 1 zu den Lagerschilden 2 abzudichten.

## Patentansprüche

1. Elektromotor mit Gehäuse (1), das folgende Merkmale aufweist:
a) Im wesentlichen axiale Kühlkanäle (5),
b) Lagerschilde (2) dienen der Umlenkung strömungsmäßig im Gehäuse nicht in Verbindung stehender Kühlkanäle (5), und/oder dichten zusammen mit dem Gehäuse (1) die Kühlkanäle (5) ab,
c) wenigstens zwei Bohrungen (7) sind als Ein- (10) bzw. Auslassstutzen (11) ausführbar,
d) die Kühlkanäle sind an Flüssigkeitskühlungen anschließbar,
**gekennzeichnet durch**
e) am Gehäuse anbringbare Umlenklaschen (8) wobei die Umlenklaschen Nuten aufweisen, die die Kühlkanäle über Bohrungen im Gehäuse strömungsmäßig verbinden.

2. Elektromotor nach Anspruch 1,, **dadurch gekennzeichnet, daß** sich die Bohrungen (7) im wesentlichen senkrecht zur Gehäuseoberfläche (6) und im Bereich der verlaufenden Kühlkanäle (5) befinden.

3. Elektromotor nach Anspruch 1 oder 2,, **dadurch gekennzeichnet, daß** die Umlenklaschen (8) aus Kunststoff oder Metall sind und mit bekannten Befestigungsmitteln am Gehäuse (1) des Elektromotors befestigbar sind.

## Claims

1. Electric motor having a housing (1) which has the following features:
a), essentially axial cooling channels (5),
b) bearing shields (2) serve the purpose of deflecting cooling channels (5), which are not connected in terms of flow in the housing, and/or, together with the housing (1), seal off the cooling channels (5),
c) at least two holes (7) can be designed to be inlet connection pieces (10) or outlet connection pieces (11),
d) the cooling channels can be connected to liquid cooling systems,
**characterized by**
e) deflection tabs (8), which can be fitted to the housing, the deflection tabs having grooves which connect the cooling channels in terms of flow in the housing via holes.

2. Electric motor according to Claim 1, **characterized in that** the holes (7) are located essentially perpendicular to the housing surface (6) and in the region of the extending cooling channels (5).

3. Electric motor according to Claim 1 or 2, **characterized in that** the deflection tabs (8) are made of plastic or metal and can be fixed to the housing (1) of the electric motor using known fixing means.

## Revendications

1. Moteur électrique ayant une carcasse (1), qui comporte les caractéristiques suivantes :
a) des canaux de refroidissement (5) sensiblement axiaux,
b) des flasques (2) servent à la déviation de l'écoulement dans les canaux de refroidissement (5) qui ne communiquent pas entre eux dans la carcasse et/ou, conjointement avec la carcasse (1), assurent l'étanchéité des canaux de refroidissement (5),
c) au moins deux forures (7) peuvent être réalisées sous forme d'orifice d'entrée (10) et d'orifice de sortie (11),
d) les canaux de refroidissement peuvent être raccordés à des systèmes de refroidissement par du liquide,
**caractérisé par**
e) des plaquettes de déviation (8) pouvant être mises sur la carcasse, les plaquettes de déviation (8) comportant des rainures (9) qui font communiquer les canaux de refroidissement sont reliés en écoulement par l'intermédiaire de forures dans la carcasse.

2. Moteur électrique selon la revendication 1, **caractérisé en ce que** les forures (7) sont sensiblement perpendiculaires à la surface de la carcasse (6) et sont disposées dans la zone du trajet des canaux de refroidissement (5).

3. Moteur électrique selon la revendication 1 ou 2, **caractérisé en ce que** les plaquettes de déviation (8) sont réalisées en matière plastique ou en métal et peuvent être fixées sur la carcasse (1) du moteur électrique par des moyens de fixation connus.
